# EUROPEAN PATENT APPLICATION

(11) **EP 3 349 346 A1**
(43) Date of publication of application: **18.07.2018**
(21) Application number: 17151407.8
(22) Date of filing: 13.01.2017
(51) Int. Cl.: H02M 3/157, H02M 1/00

(54) **CONTROLLER ARCHITECTURE FOR DIGITAL CONTROL OF PWM CONVERTERS**

(71) Applicant: IDT Europe GmbH, 01109 Dresden (DE)
(72) Inventor: MEOLA, Marco, 80638 München (DE)
(74) Representative: Lippert Stachow Patentanwälte Rechtsanwälte

(57) **Abstract**

The invention discloses a controller architecture for digital control of a PWM converter regulating an output voltage configured to generate a pulse width modulation (PWM) signal to control a power stage in dependence of a voltage error signal. The object to find an always stable controller architecture that can compensate for load transients and for abrupt changes of the set-point voltage will be solved by a controller architecture comprising an inner loop comprised an error amplifier, a digital filter configured to compensate for load transients and for abrupt changes of a set-point value and a digital pulse width modulator, and an outer loop comprised a second error amplifier, a second digital filter configured to compensate a voltage error of the inner loop to achieve a regulation of an output voltage around the desired set-point value and providing an input for the first error amplifier of the inner loop, wherein the combination of the inner loop and the outer loop configured to eliminate the dependency of the controller parameters with respect to components values of the power stage (1) of the PWM converter.

## Description

The invention discloses a controller architecture for digital control of a PWM converter regulating an output voltage configured to generate a pulse width modulation (PWM) signal to control a power stage in dependence of a voltage error signal.

Modern digital PWM controllers used in Point Of Load (POL) applications for high performance computing platforms deliver tight regulation of the output voltage by means of a combination of two control techniques:
- A conventional linear Proportional Integral Derivative (PID) controller to provide robust, stable and predictable regulation of the output voltage and
- A non-linear controller to break the performance limitation of linear controllers during a sudden change of the load.

Linear PID controllers, when used to control the power stage of a DC/DC converter, such as a Buck converter for example, have the limitation that the controller poles and zeros have to be specifically tailored to the power stage to which they are applied. This means that controller parameters are a function of the components values constituting the power stage itself. When the same PID controller is used to compensate different power stages stability issues occurs.

Several attempts have been made to make controller parameters independent from power stage components. Analog PWM controllers use two separate control loops to control independently the inductor current and the output voltage thus eliminating the dependency of controller parameters from the value of the used inductance. Nevertheless dependency between controller parameters and output capacitance used still exists.

Digital PWM controllers attempted to solve the problem by implementing auto-tuning algorithms, i.e. algorithms that would firstly try to identify the power stage being controlled extracting information from the converter behavior under specific stimuli; and secondly tailor controller poles and zeros to the identified power stage. Such auto-tuning algorithms are well described in the state of the art but have not being well accepted in the market because of one or more of the following problems:
1) Perturbations are injected in the system in steady state thus causing jitter on the PWM signal and unwanted noise on the output voltage;
2) Computational complexity of the algorithms used to identify the power stage is high;
3) The identification phase may require a long learning phase;
4) Tailored controller parameters may lead to sub-optimal performance and in some cases to instability;

On the other side manual optimization of controller parameters is not a trivial task and requires power expertise that is often not available at the user side. Graphical User Interfaces (GUIs) provided together with digital PWM controllers try to overcome the lack of such expertise but fail to provide controller parameters optimized for the specific application due to the limited accuracy of the models used to generate such control parameters. As a consequence a lot of support is required from the power companies to provide optimal controller solutions to their customers.

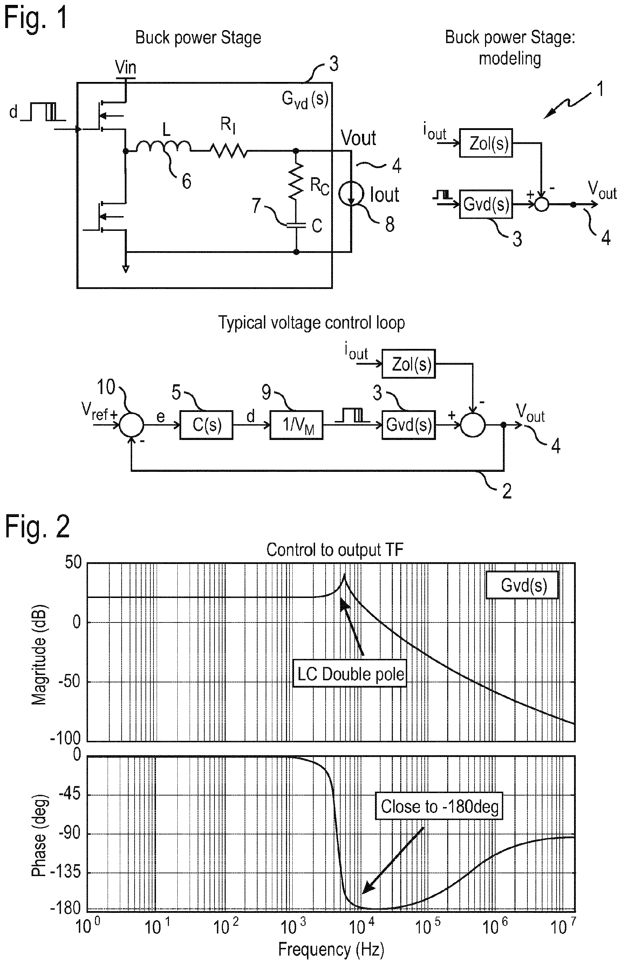

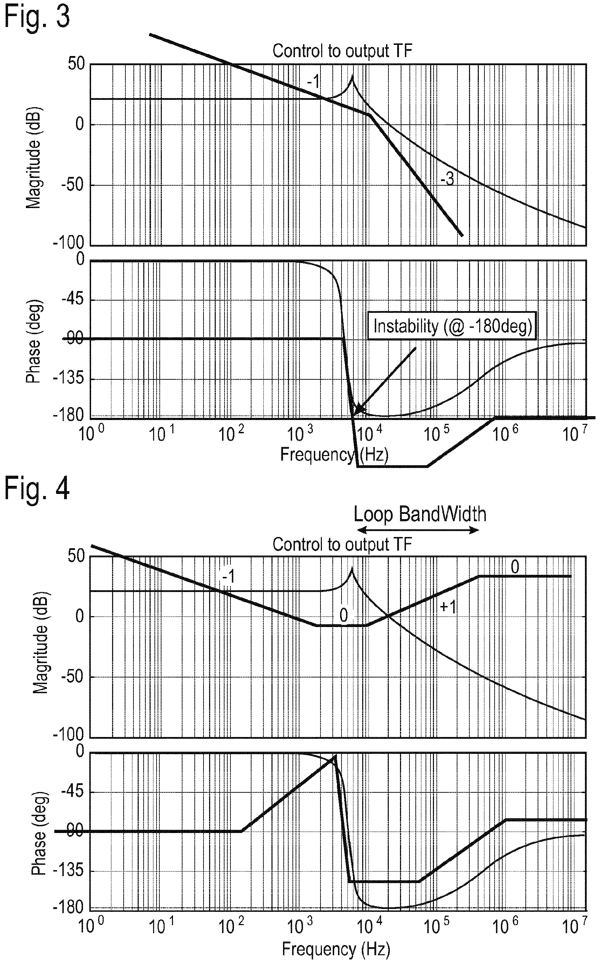

Fig. 1a shows a classical buck converter power stage 1 with the corresponding modeling in fig. 1b and a converter with a feedback 2 circuit forming a typical voltage control loop can be modeled as show in fig. 1c. The corresponding Bode plots for the transfer function 3 of the buck converter power stage 1 are shown in fig. 2 (magnitude and phase), whereas the compensation results with an integrator for ensuring that Vₒᵤₜ 4 is regulated around a desired set-point are shown in fig. 3. The disadvantage is that the integrator introduces a phase shift of -90 degrees on the frequency response of the power stage 1 making the closed loop unstable. Therefore, the compensation has been performed with a PID controller in such a way that the controller zeros are placed around the LC double pole, because otherwise the control loop is also unstable (see figure 4). It is obvious that the controller parameters 5 and power stage components, such as the inductor L 6 and the capacitor C 7 etc., are depending from each other. Therefore, the controller 5 must be manually tuned to achieve an optimal performance, so a power expertise is required to achieve stable loop operation. As well, once the controller 5 has been tuned the same controller cannot be used with another power stage without deteriorating closed loop performance and eventually provoke closed loop instability. So far, the controller design is carried out in the frequency domain that requires also control loop expertise.

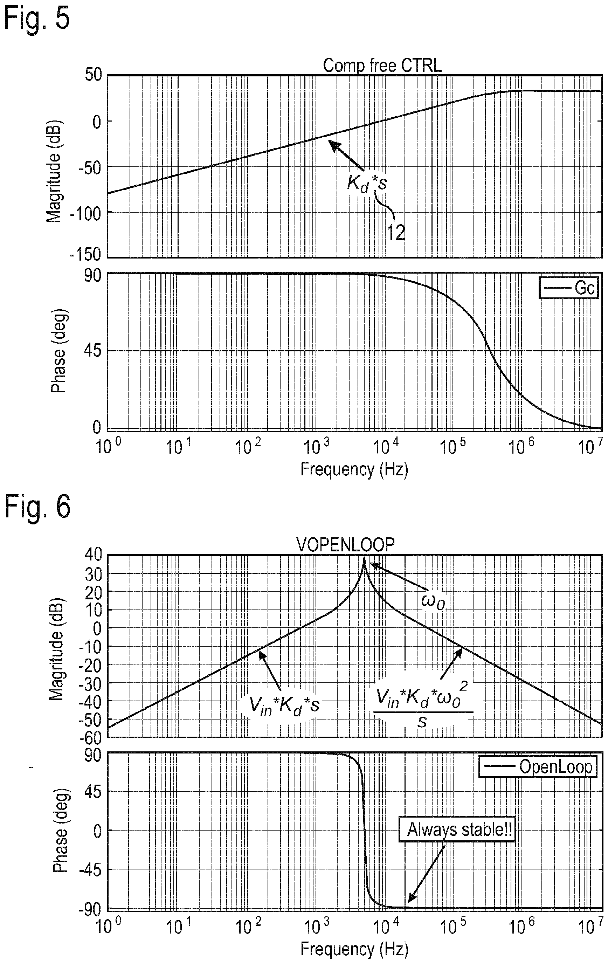

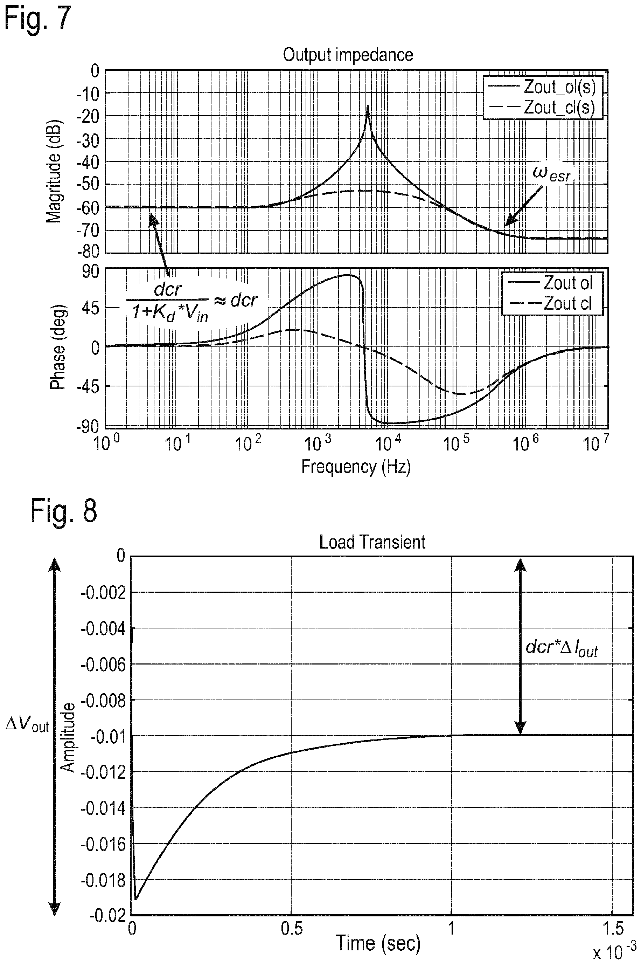

Some considerations have been made to solve the aforementioned problems. In order to compensate for load transients current 8 a derivative controller has been used. The Bode plots are shown in figure 5. The derivative controller boosts the phase of 90 degrees of the frequency response of the buck converter power stage 1 over the whole range of frequencies (see figure 2). Compensation of the transfer function 3 using the derivative controller is shown in figure 6. It can be seen that the frequency response of the compensated transfer function is always stable. Nevertheless figure 8 shows a drawback of this setup, namely the output voltage 4 does not settle back to the desired set-point value after the load transient. Figure 7 shows the Bode plots of the output impedance for open and closed loop cases. The finite DC resistance in figure 7 indicates that the output voltage 4, once the load transient is over, will always differ from the set-point value by a factor proportional to the dcr of the inductor and the step in the load current ΔIₒᵤₜ.

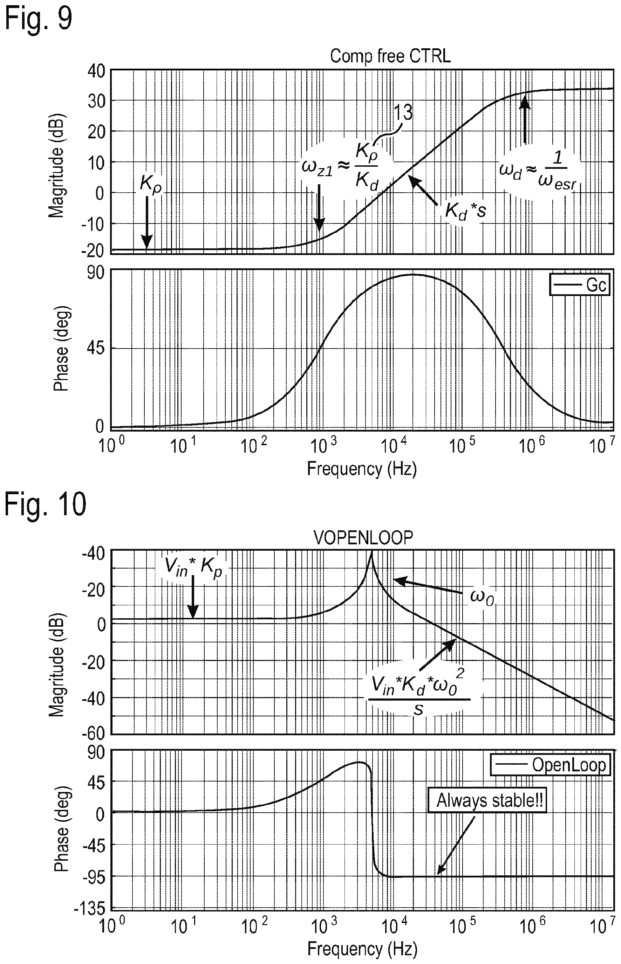

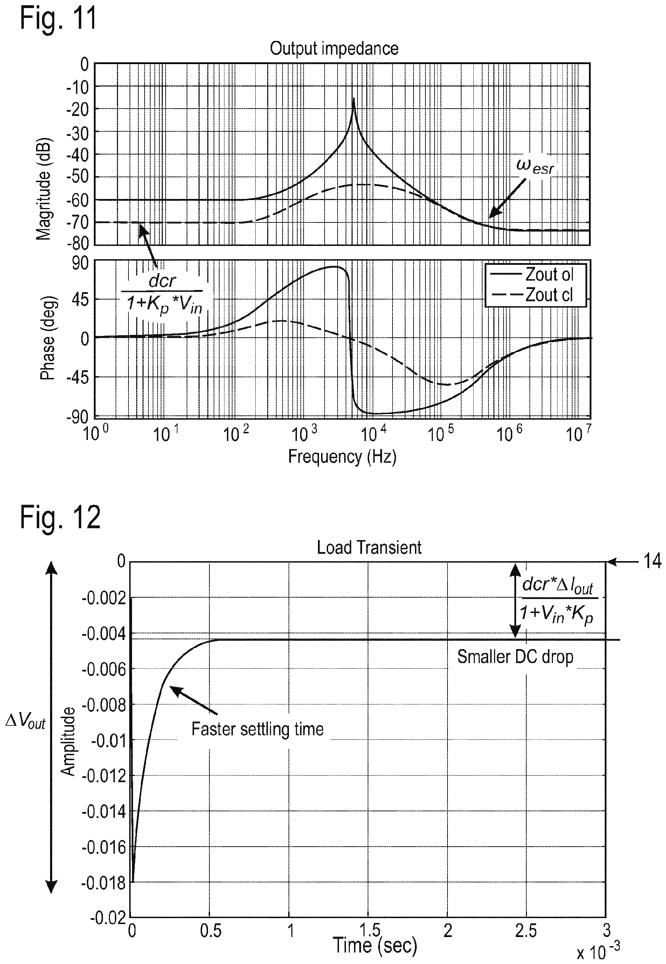

Another possibility is to use a proportional-derivative (PD) controller 13 to compensate load transients 8. The result is shown in figure 9, whereas a phase boost in the range of wz1 to wd occurs. In this case wz1 is selected low enough to boost the phase of the power stage 1 at the LC double pole while wd is set to cancel out the effect of the ESR zero of the output capacitor 7. Fig. 10 shows the response of compensation the transfer function of the power stage Gvd 3 with a PD controller. The control loop is also always stable and the dc resistance is smaller for the closed loop with the PD controller than using only a derivative controller (figure 11). Nevertheless the output voltage Vₒᵤₜ 4 does not settle back completely to the desired set-point 14 (see figure 12) although the difference is smaller than by using only a derivative controller (compare figures 8 and 12).

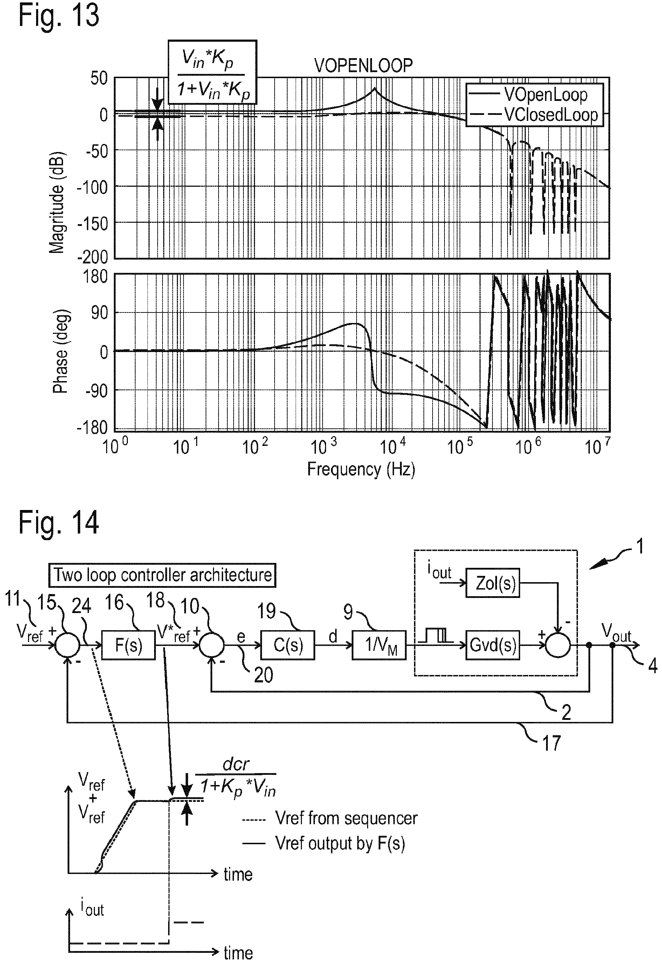

Comparing the voltage closed loop (Vₒᵤₜ/V_{ref}) to the voltage open loop response, shown in figure 13, one can see that the output voltage Vₒᵤₜ does not track changes of the set-point value V_{ref} when using a proportional-derivative controller in a voltage control loop. It is therefore the object of the invention to find an always stable controller architecture for digital control of PWM converters that can compensate for load transients and for abrupt changes of the set-point voltage.

The object of the invention will be solve by a controller architecture for digital control of a PWM converter regulating an output voltage configured to generate a pulse width modulation (PWM) signal to control a power stage in dependence of a voltage error signal, the voltage error signal being a difference between a reference voltage and the output voltage; the controller comprising an inner loop comprised an error amplifier, a digital filter C(s) configured to compensate for load transients and for abrupt changes of a set-point value and a digital pulse width modulator, and an outer loop comprised a second error amplifier, a second digital filter F(s) configured to compensate a voltage error of the inner loop to achieve a regulation of an output voltage around the desired set-point value and providing an input for the first error amplifier of the inner loop, wherein the combination of the inner loop and the outer loop are configured to eliminate the dependency of the controller parameters with respect to components values of the power stage of the PWM converter.

The linear controller architecture eliminates the dependency of the controller parameters with respect to the components values of the power stage. This means that controller parameters can be tuned to shape controller regulation performance but do not affect the stability of the control loop. In this way non power experienced users can easily tune the controller without the risk of incurring into stability problems. In order to eliminate the dependency of controller parameters from the power stage components a two loop architecture is employed: A first loop, called inner loop, is used to provide a fast reaction to changes of the regulated output voltage; a second loop, called outer loop, is used to provide slower but more accurate regulation of the output voltage to meet the accuracy requirement dictated by the application. As stated before the inner loop provides a fast but coarse regulation of the output voltage. Such control action is required to suppress the effect of sudden load changes on the output voltage. The outer loop is then taking care of tightly regulating the output voltage to the desired set-point value. In conventional digital PID controllers typically employed digital PWM controllers the controller parameter providing such accurate control action, i.e. the integral parameter, is the cause of control loop instability in DC/DC converters. For example, the integrator gain can be made small enough to achieve stability for a wide number of power stage scenarios with the drawback of poor regulation performances.

In a preferred embodiment of the invention the digital filter of the inner loop is configured as a pure derivative controller.

Or in another preferred embodiment of the inventive controller architecture the digital filter C(s) of the inner loop is configured as a proportional-derivative controller.

In another preferred embodiment of the inventive controller architecture the digital filter C(s) of the inner loop is configured as a proportional-integrative-derivative controller with an integral gain, whereas the integral gain is configured such that close loop stability is achieved for a wide number of power stage scenarios despite the poor regulation performance of the closed loop system.

The main idea behind the controller architecture is based on the property of any closed loop system to suppress the poles and zeros of the plant once the control loop with enough gain is closed around it. In this way a pure derivative (D) or a proportional-derivative controller (PD) as well as a proportional-integral-derivative controller (PID) stabilizing a wide number of power stages can be used for the fast inner loop to compensate for load transients and for abrupt changes of the set-point voltage.

In a further preferred embodiment the second digital filter F(s) of the outer loop is configured as a pure integrator controller to compensate the closed inner loop.

Alternatively, the second digital filter F(s) can be configured as any other controller type having an integrator behavior at frequencies lower than an inner loop bandwidth can be used for the same purpose.

In the preferred implementation an integral controller (I) can be used to compensate the closed inner loop to achieve regulation of the output voltage around the desired set-point value. Since the integral controller employed in the outer loop compensates the closed inner loop the use of such controller does not have any effect on the stability of the control loop as in a conventional linear PID controller.

The implementation of the inventive controller architecture succeed therein that the outer loop comprising a feedback loop feed backing the output voltage to the second error amplifier calculating an internal voltage error signal as a difference between the reference signal and the output voltage.

The outer loop is a slower loop than or as fast as the inner loop, whereas the controller F(s) is a pure integrator or alternatively a controller of an integrator type that compensates the closed inner loop. With the use of the outer loop and the integrator the cross over frequency can be pushed up to the bandwidth of the inner loop. Therefore, the integrator is required to ensure that the output voltage is regulated around the desired set-point of the converter. So the outer loop compensates the residual error between a reference voltage and the output voltage, whereas the inner loop provides a fast reaction to load transients.

Furthermore, the inner loop comprising a feedback loop feed backing the output voltage to the first error amplifier calculating the voltage error signal as a difference between an internal reference signal of the outer loop and the output voltage.

The output voltage is controlled by the inner loop in order to suppress load transients. The inner loop is a fast voltage loop that regulates the output voltage with a proportional-derivative controller. The voltage loop is always stable up to very high bandwidths where the stability boundary is given by delay introduced by the control loop itself. By closing the inner voltage loop the two poles of the power stage are eliminated due to the fact that the closed control loop suppresses the power stage poles and zeros up to the control loop bandwidth. From the Bode diagram of the compensated system it can be seen that the phase curve is very far from -180 deg, therefore, the control loop is always stable. In another embodiment the inner loop comprising a feedback loop feed backing the output voltage to the second error amplifier and feed forwarding a difference of the output voltage signal and the reference voltage signal as the internal voltage error signal as an input to the first error amplifier. The advantage of this implementation is that only a single flash Analog-to-Digital converter is used while the summing node or the first error amplifier is implemented in the digital domain.

The digital filter C(s) of the closed inner loop and the digital filter F(s) of the outer loop have controller parameters that are tunable in the time domain.

The advantage of performing the tuning of controller parameters in the time domain is that this does not require the notion of poles and zeros and their location in frequency and therefore, no power expertise is required to achieve control loop stability. Additionally, the implementation of the inventive controller structure fits typical control loop architecture of a digital PWM controller, i.e. the proposed controller architecture just replaces the linear PID controller architecture without requiring any additional hardware.

It is very advantageous that a stability of the controlled converter is independent of a choice of the controller parameters. In this way controller parameters do not influence any longer the stability of the converter but only shape the regulation behavior of the converter. So, the controller architecture eliminates the dependency of the controller parameters from the value of power stage components.

The invention will be explained in more detail using exemplary embodiments.

The appended drawings show
- Fig. 1: a) classical buck converter power stage; b) modeling of the buck power stage; c) typical voltage control loop;
- Fig. 2: Bode plot of the transfer function of the buck converter power stage;
- Fig. 3: Open loop compensated frequency response of the buck converter power stage with an integrator as controller;
- Fig. 4: Open loop compensated frequency response of the buck converter power stage with a PID as controller;
- Fig. 5: Bode plot of the frequency response of a derivative controller;
- Fig. 6: Compensation of the power stage transfer function by means of the derivative controller in fig. 5;
- Fig. 7: Bode plot of the output impedance for open and closed loop with the derivative controller;
- Fig. 8: Drawback of using only a derivative controller to compensate for load transients;
- Fig. 9: Bode plot with the frequency response of a proportional-derivative controller;
- Fig. 10: Frequency response of the compensated transfer function of the power stage Gvd with a PD controller;
- Fig. 11: Frequency response of the control loop when using a PD controller;
- Fig. 12: Drawback of using only a PD controller for regulating an output voltage to compensate for load transients;
- Fig. 13: Comparison of the voltage closed loop (Vₒᵤt/V_{ref}) to the voltage open loop response when a PD controller is used;
- Fig. 14: a) Basic idea of the inventive controller architecture, a closed inner voltage loop with a PD-controller and a I-controller as a function of the error voltage, and an output loop, b) the corresponding V_{ref}(t) and V*_{ref}(t) or Iₒᵤₜ(t) diagrams;
- Fig. 15: Inventive inner loop to control the output voltage with a reference voltage and to suppress load transients;
- Fig. 16: Frequency response of the closed voltage loop (Vₒᵤₜ/V_{ref}) of circuitry shown in fig. 16;
- Fig. 17: Inventive outer loop to compensate for voltage drops;
- Fig. 18: Frequency response of the compensated inner loop and the controller used to compensate the outer loop;
- Fig. 19: Frequency response of the voltage loop (Vₒᵤₜ/V_{ref}) of the circuitry shown in fig. 17 if the inner and outer loop being closed;
- Fig. 20: Frequency response of the output impedance of the circuitry shown in fig. 17 if the inner loop is closed (solid) compared to the open loop output impedance (dashed);
- Fig. 21: Exemplary embodiment of the inventive controller architecture: Expected load transient Vₒᵤₜ(t) for the inner and outer loop;
- Fig. 22: Schematic drawing of the implementation of the inventive two-loop concept a) using two summing nodes, b) using a single summing node;
- Fig. 23: a) Iinner loop in the proposed embodiment using two summing nodes; b) Inner loop in the proposed embodiment using a single summing node;
- Fig. 24: a) Outer loop in the proposed embodiment using two summing nodes; b) Outer loop in the proposed embodiment using a single summing node.

Figure 14 presents the basic idea of the inventive controller architecture, whereas an inner voltage loop is closed by feed backing 2 the output voltage 4 back to the first error amplifier 10 of the power converter circuitry whereas the inner loop is configured with a PD-controller 19 in order to compensate for load transients 8 and for abrupt changes of a set-point value of the output voltage 4. Secondly, parameters of an I-controller 16 as a function of the error voltage e(t) 20 is determined to compensate for voltage error e(t) = V_{ref} - Vₒᵤₜ. Fig. 14 b) shows the corresponding V_{ref}(t) and V*_{ref}(t) or Iₒᵤₜ(t) diagrams with the influences of the PD- 19 and I- controller 16.

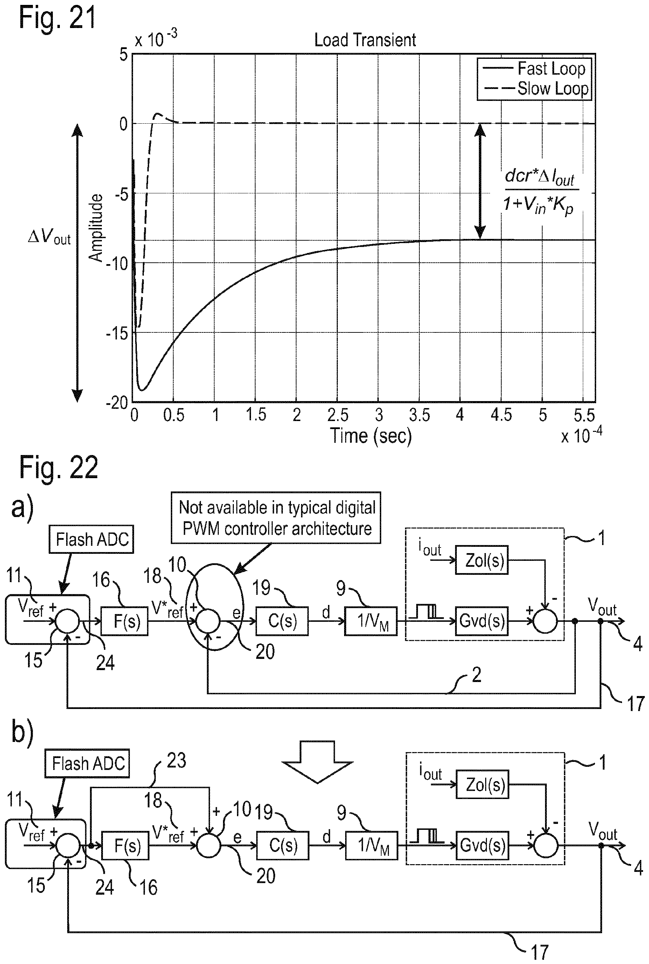

The embodiment as presented in figure 14 cannot be easily implemented by a digital controller because of the two summing nodes 15 and 10 that would require digital to analog and analog to digital conversion of the quantities V_{ref} 11 - Vₒᵤₜ 17, V*_{ref} 18 - Vₒᵤₜ 2 and the voltage error e 20. In fact as shown in figure 22a) a typical digital controller architecture for PWM converters implements a flash ADC to implement the summing node V_{ref} 11 - Vₒᵤₜ 17 while summing node 10 is not available.

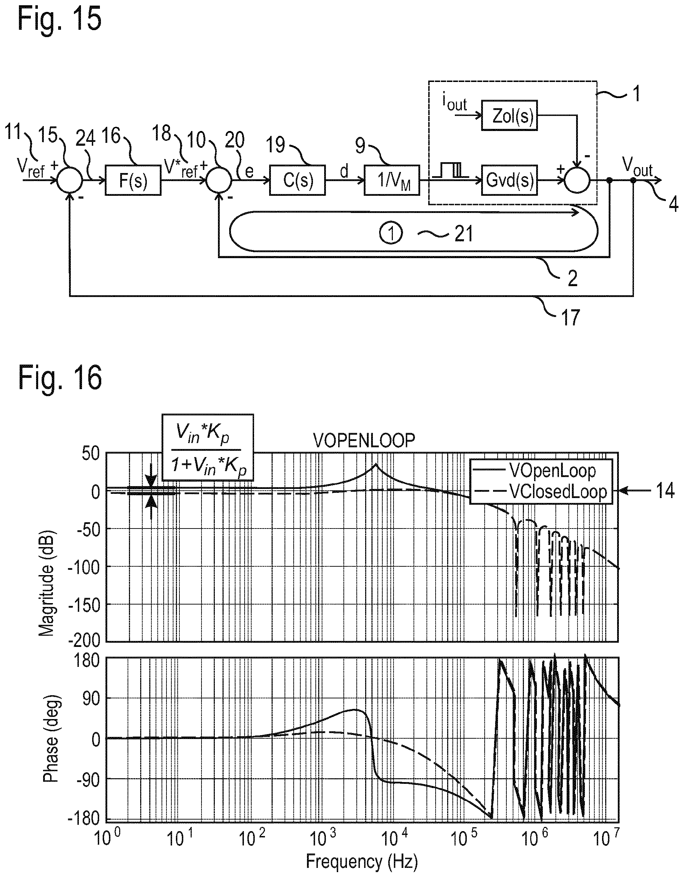

Figure 15 shows the inventive inner loop 21 which comprises an error amplifier 10, a PD-controller 19, a digital pulse width modulator 9 configured to regulate the output voltage 4 of a power stage 1 and a feedback loop 2 feed backing the output voltage 4 back to the error amplifier respective summing node 10. The voltage loop is always stable up to very high bandwidths where the stability boundary is given by delay introduced by the control loop itself. By closing the inner voltage loop 21 the two poles of the power stage 1 are eliminated due to the fact that a closed control loop suppresses the power stage poles and zeros up to the control loop bandwidth. From the Bode diagrams in figure 16 it can be seen that the phase curve of the closed inner loop is very far from -180 deg, therefore, the inner control loop is always stable.

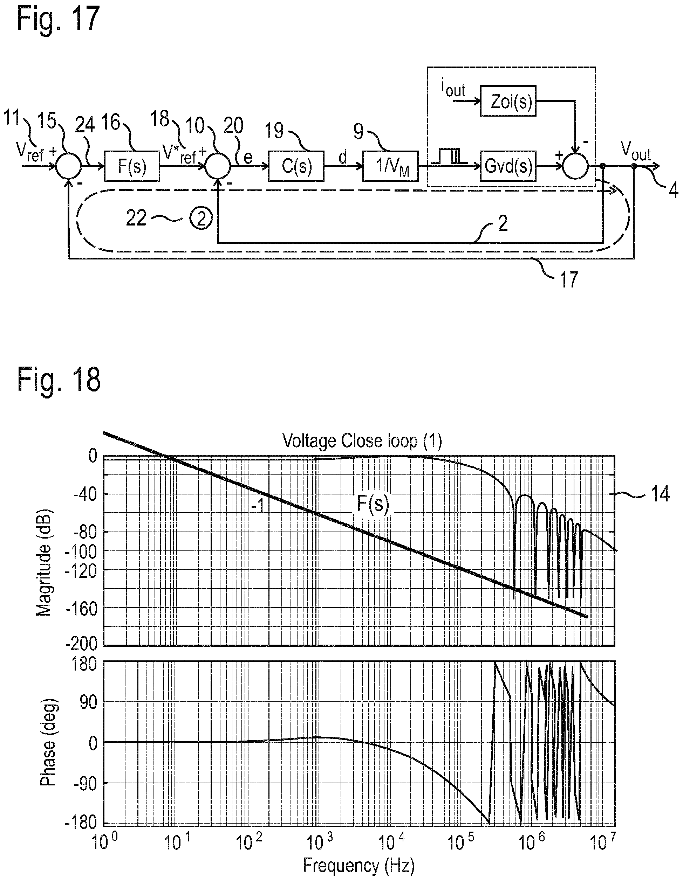

Figure 17 shows the inventive outer loop 22 which comprises a second error amplifier 15, an I-controller 16, whereas the output V*_{ref} of the I-controller F(s) 16 is used as an input for the first error amplifier or summing node 10 a feedback loop 17 feed backing the output voltage 4 back to the said second error amplifier or second summing node 15. The integrator controller F(s) 16 is used to compensate for the closed inner loop 21 in such a way that the integrator controller 15 ensures that Vₒᵤₜ is regulated around a desired set-point value as shown in figure 18.

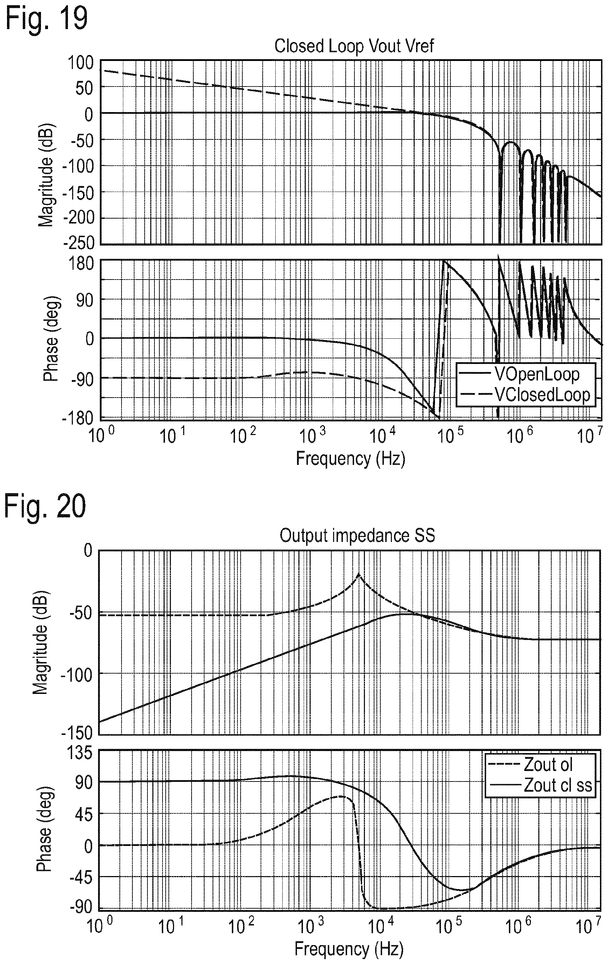

Figure 19 shows the frequency response of the voltage loop (Vₒᵤₜ/V_{ref}) of the circuitry shown in figure 17 if the inner 21 and outer loop 22 being closed, whereas the magnitude of the output voltage 4 tracks set-point changes up to the outer loop bandwidth and the phase response in dependency of the frequency shows that the phase is very far from -180 degress, thus the system is always stable.

Figure 20 shows the output impedance of the circuitry shown in figure 17 if the inner loop 21 is closed (solid line) compared to the open loop output impedance (dashed line). The DC output impedance Zₒᵤₜ is -infinity meaning that the output voltage settles back to the desired set-point value after a load transient. The dashed line shows Zₒᵤₜ for an open loop and the solid line shows Zₒᵤₜ for the closed loops.

Figure 21 shows the influence of the inventive controller architecture for an exemplary embodiment: The inner loop 21 provides a fast reaction to load transient meaning that a change in the output voltage Vₒᵤₜ due to a change in the load 8 is compensated very fast, and the outer loop 22 compensates for residual error (V_{ref} - Vₒᵤₜ) and settles the output voltage 4 back to a desired set-point value. Thereby, the proportional controller parameter Kₚ controls residual error to be compensated by the outer loop 22, the derivative controller parameter K_{d} controls the maximum undershoot and the integral controller parameter of the outer loop 22 controls the settling time.

Figure 22 a) and b) shows the schematic drawings of two possible implementation procedures for the two loop controller architecture. For calculating the difference between the reference voltage 11 and the output voltage Vₒᵤₜ 4 a flash Analog-to-Digital converter (ADC) is used. The advantage by using a flash ADC is to achieve high resolution of the sensed voltage 17 around the desired set-point value V_{ref} 11.

The control loop diagram in figure 22a) is reworked to the one in figure 22b) where the inner loop comprising a feedback loop feed backing the output voltage to the second error amplifier is now implemented by feed forward 23 of the output of the summing node 15, whereas the summing node is implemented by a flash ADC as in a typical digital controller architecture for PWM converters.

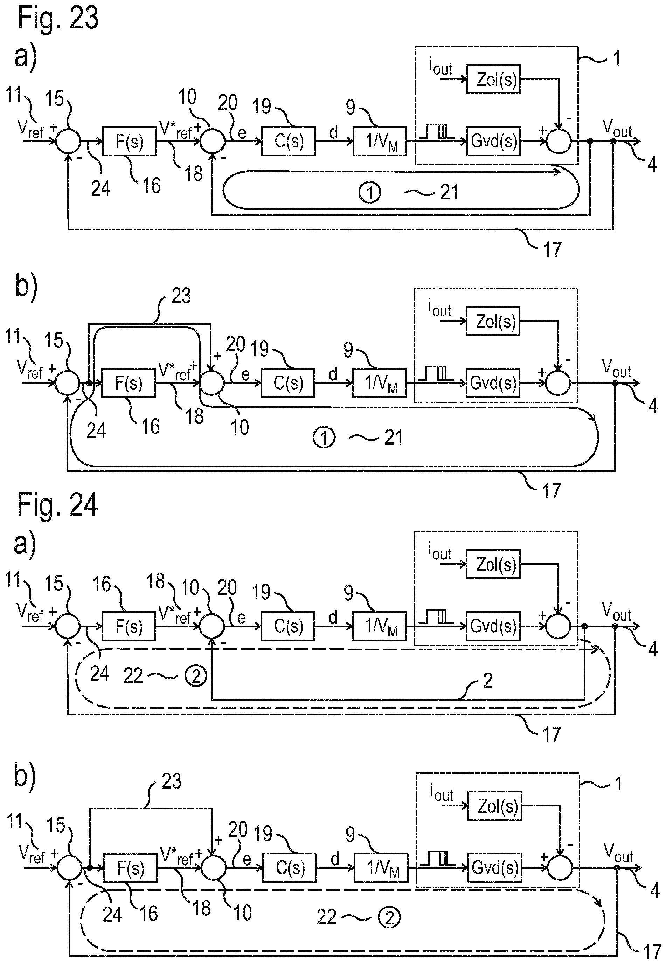

Figure 23 a) shows a first implementation of the inner loop 21, whereas the output voltage 4 is feed backed 2 to the first error amplifier 10. Figure 22 b) shows a second implementation of the inner loop 21, whereas for the second implementation the result of the difference between the reference voltage V_{ref} 11 and the output voltage Vₒᵤₜ 4 is used as an input value for the first error amplifier 10. The advantage of the second implementation is that only a single flash Analog-to-Digital converter is used while the summing node 10 is implemented in the digital domain.

Figures 24 a) and b) show a first and a second implementation of the outer loop 22.

The proposed controller architecture eliminates the dependency of the controller parameters from the value of the power stage components 1. Furthermore, the stability of the controlled DC/DC converter is not any longer influenced by the choice of controller parameters. Rather, the controller parameters only "shape" the regulation behavior of the digital PWM controller. Thereby, the tuning of the controller parameters can be performed in the time domain without requiring any power expertise to achieve control loop stability.

The implementation of the controller fits the typical control loop architecture of digital PWM controller, i.e. the proposed controller architecture replaces the linear PID controller architecture without requiring changes on the existing architectures.

### Reference signs

- 1: buck converter stage
- 2: feedback loop
- 3: transfer function of the buck power stage
- 4: output voltage
- 5: digital filter, controller
- 6: inductor of the power stage
- 7: capacitance of the power stage
- 8: load current
- 9: digital pulse width modulator
- 10: error amplifier, summing node
- 11: reference voltage
- 12: derivative controller parameter
- 13: proportional-derivative controller
- 14: desired set-point
- 15: second error amplifier, summing node
- 16: outer loop integrator controller
- 17: outer feedback loop
- 18: internal reference voltage
- 19: inner loop PD-controller, D-controller
- 20: error voltage
- 21: inner loop or first loop or fast loop
- 22: outer loop or second loop or slow loop
- 23: second embodiment of the inner loop, feed forward
- 24: internal voltage error signal

## Claims

1. Controller architecture for digital control of a PWM converter regulating an output voltage (4) configured to generate a pulse width modulation (PWM) signal to control a power stage (1) in dependence of a voltage error signal (20), the voltage error signal (20) being a difference between a reference voltage (18) and the output voltage (4); the controller comprising an inner loop (21) comprised an error amplifier (10), a digital filter (5) configured to compensate for load transients (8) and for abrupt changes of a set-point value and a digital pulse width modulator (9), and an outer loop (22) comprised a second error amplifier (15), a second digital filter (16) configured to compensate a voltage error (20) of the inner loop (21) to achieve a regulation of an output voltage (4) around the desired set-point value and providing an input for the first error amplifier (10) of the inner loop (21), wherein the combination of the inner loop (21) and the outer loop (22) configured to eliminate the dependency of the controller parameters with respect to components values of the power stage (1) of the PWM converter.

2. Controller architecture according to claim 1, wherein the digital filter (5) of the inner loop (21) is configured as a pure derivative controller (19).

3. Controller architecture according to claim 1, wherein the digital filter (5, 19) of the inner loop (21) is configured as a proportional-derivative controller (19).

4. Controller architecture according to claim 1, wherein the digital filter (5, 19) of the inner loop (21) is configured as a proportional-integrative-derivative controller (19) with an integral gain, whereas the integral gain is configured such that close loop stability is achieved.

5. Controller architecture according to claim 1, wherein the second digital filter (16) of the outer loop (22) configured as a pure integrator controller (16) configured to compensate the closed inner loop (21).

6. Controller architecture according to claim 1, wherein the second digital filter (16) configured as a controller type having an integrator behavior at frequencies lower that an inner loop bandwidth and configured to compensate the closed inner loop (21).

7. Controller architecture according to claim 1, wherein the outer loop (22) comprising a feedback loop (17) feed backing the output voltage (4) to the second error amplifier (15) calculating an internal voltage error signal (24) as a difference between the reference signal (11) and the output voltage (4).

8. Controller architecture according to claim 1, wherein the inner loop (21) comprising a feedback loop (2) feed backing the output voltage (4) to the first error amplifier (10) calculating the voltage error signal (20) as a difference between an internal reference signal (24) of the outer loop (22) and the output voltage (4).

9. Controller architecture according to claim 1, wherein the inner loop (21) comprising a feedback loop (2) feed backing the output voltage (4) to the second error amplifier (15) and feed forwarding (23) a difference of the output voltage signal (4) and the reference voltage (11) signal as the internal voltage error signal (24) as an input to the first error amplifier (10).

10. Controller architecture according to one of the former claims, wherein the digital filter (5) of the closed inner loop (21) and the digital filter (16) of the outer loop (22) are controller parameters whereas the controller parameters are tunable in the time domain.

11. Controller architecture according to one of the former claims, wherein a stability of the controlled converter is independent of a choice of the controller parameters.
